Europäisches Patentamt

European Patent Office

Office européen des brevets

(19)

(11) Publication number: **0 453 659 A1**

# EUROPEAN PATENT APPLICATION

(12)

(21) Application number: **90201034.7**

(22) Date of filing: **25.04.90**

(51) Int. Cl.5: **H02J 13/00, H05B 37/03**

(43) Date of publication of application:
**30.10.91 Bulletin 91/44**

(84) Designated Contracting States:
**AT BE CH DE DK ES FR GB GR IT LI LU NL SE**

(71) Applicant: **Bonomo, Mario**
**Via Pergolesi 9**
**Vigevano (Pavia)(IT)**

Applicant: **Pollice, Marco**
**Via Melchiorre Gioia 88**
**Milano(IT)**

Applicant: **Baroni, Brunello**
**Via Vittorio Veneto 2**
**Sesto San Giovanni (Milano)(IT)**

(72) Inventor: **Bonomo, Mario**
**Via Pergolesi 9**
**Vigevano (Pavia)(IT)**
Inventor: **Castelli, Enrico**
**Via Stoppani 10**
**Milano(IT)**

(74) Representative: **Raimondi, Alfredo, Dott. Ing.**
**Prof. et al**
**Dott. Ing. Prof. RAIMONDI ALFREDO S.r.l.**
**Piazzale Cadorna 15**
**I-20123 Milano(IT)**

(54) **Apparatus for picking-up and transmitting failure signals in installations comprising several lamps in parallel, especially for public lighting systems.**

(57) Apparatus for picking up and transmitting failure signals in installations comprising several lamps in parallel, especially for public lighting systems and the like, which comprises a pick-up and transmission device associated with each lamp, having an element for measuring the current passing through said lamp and an amplifying circuit, for generating a message and transmitting said message by waves carried on the supply line to the lamp, there being present, along the supply line for the lamps, a receiver device for the signal adapted for picking up the message, recognizing its place of origin and remotely indicating and/or signalling the position of the failed lamp corresponding to it.

Fig.2

The subject of the present invention is an apparatus for picking up and transmitting failure signals in installations comprising several lamps in parallel, especially for public lighting systems and the like.

A problem of particular importance for public lighting systems and for analogous installations consists of identifying the failed lamps, in order to enable them to be rapidly replaced.

In the case of public street lighting, for example, a failure promptly to replace the failed lamps can compromise road safety and personal safety, making it easier for attacks, automobile thefts and so on to be carried out in the dark zones resulting from these failures, as well as adversely affecting, in these circumstances, the image of the location and of its public administration.

Similar problems can arise in public and private installations of large size, such as industrial areas, exhibitions and the like.

For maintaining a check on the failed lamps, in addition to a programmed maintenance and replacement, before the scheduled exhaustion limit, where it is not realistic to rely upon the individual indications of passers-by, as for example in large cities, observation patrols have been instituted, but these can only operate during the night, with associated disadvantages; flag devices have also been provided, designed for automatic release in the case of the failure of a lamp, thereby enabling it to be detected even during daylight hours, but these devices have been complex and expensive and in every case required a patrol to pass through the zone being monitored, although this could be during the day.

Because public lighting installations are usually subdivided into groups of lamps, each controlled by a sub-station, it has also been proposed to equip each sub-station with a current measuring device, of sufficient sensitivity to pick up the variation in demand resulting from a broken lamp; in this way it was possible to know that in a certain sector one or more lamps were broken, without however being able to know the precise location of the lamps themselves, and therefore requiring in every case a patrol through the area to find the lamp requiring replacement.

The requirement therefore arises for having available an apparatus which shall enable the number and location of the failed lamps to be detected at a distance, for arranging promptly for their replacement, and if necessary also establishing orders of priority to the benefit of those zones for which the lighting is deemed to be of greater importance.

For an apparatus of this type, the requirements are low cost, low electricity consumption and high reliability, and furthermore it is required that there shall not be a need for connecting cables to the sub-station, so that installation of supplementary lines shall not be necessary, even in already existing systems, which would involve very high expense.

These results are achieved by the present invention, which provides an apparatus for picking-up and transmitting failure signals in installations comprising several lamps in parallel, especially for public lighting systems and the like, which comprises a pick-up and transmission device associated with each lamp, having an element for measuring the current passing through said lamp and an amplifying circuit, for generating a message and transmitting said message by waves conveyed on the feed line to the lamp, there being present, along the feed line to the lamps, a receiver device for the signal, adapted for receiving the message, recognizing the place of origin and remotely indicating and/or signalling the position of the failed lamp corresponding to it.

The pick-up and transmission device associated with each lamp comprises an inductive current sensor connected, via an amplifier and a signal detector, to a programmed logic unit generating a coded message, the message being despatched to a transmitter adapted for emitting, on the feed line to the lamp, modulated carried waves carrying the message itself.

The programmed logic unit comprises a plurality of microswitches, capable of being manually actuated according to combinations which unambiguously define the lamp with which the pick-up and transmission device is associated, the message emitted by the logic unit comprising a code corresponding to the combination of switches chosen.

The logic unit comprises one or more inputs for signals supplied from corresponding auxiliary sensor devices, associated with the pick-up and transmission device, and adapted for picking up phenomena connected with the failure of the lamp, the message generated by the logic unit comprising data relating to the signals of the auxiliary sensors.

The logic unit supplies, in correspondence with the observation of the failed lamp, several successive equal messages at predetermined intervals which are different for each pick-up and transmission device of a duration greater than the duration of a single message.

Further details will become apparent from the following description, given with reference to the attached drawings, in which there are shown:

in Figure 1, a general layout of a group of lamps for street lighting, equipped with the device according to this invention;

in Figure 2, a block diagram of the pick-up and transmitter group;

in Figure 3, the electrical diagram of the group of Figure 2.

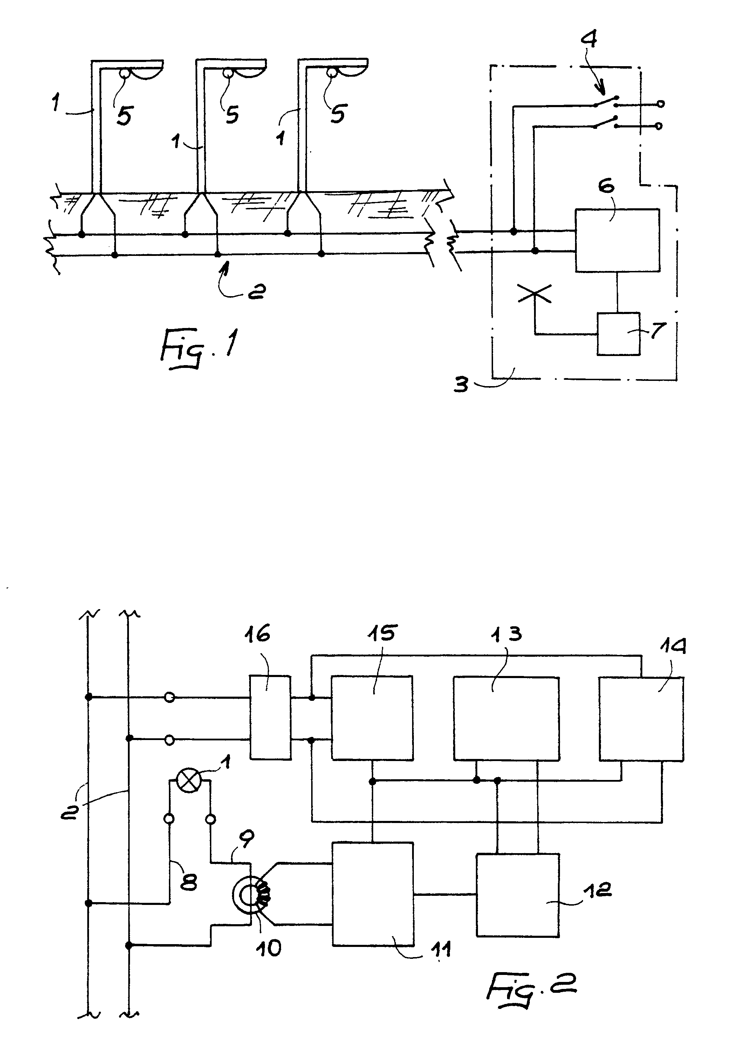

As shown in Figure 1, a public lighting system comprises a plurality of lamps 1, connected in parallel to an electrical feed line 2. A group of lamps leads to a central station 3, equipped with a line isolating switch 4, through which the group is supplied.

For the purpose of signalling the extinguishing of a lamp, each of the lamps is equipped with a monitoring device 5, adapted for emitting a signal, in the form of a carried wave, on the line 2 itself, which can be picked up by a receiver 6, itself of known type, and which therefore can be transmitted to a distance by means of a transmitter 7, of conventional type, for example by radio wave, to a receiving and decoding element connected, for example, to a control processor.

As can be seen in greater detail in Figure 2, a lamp 1 is connected to the line 2 by means of conductors 8, 9; with one of these conductors there is associated a current meter 10, by which the absence of passage of current caused by the failure of the lamp is detected. The meter 10 is connected to an amplifying and filtering circuit 11 and to a signal detector 12, connected in turn to a logic unit 13 and a transmitter circuit 14; a feeder 15 is also connected, via line protection elements 16, directly to the line 2, and this feeder supplies the amplifying and filtering circuit 11, the signal detector 12, the logic unit 13 and the transmitter 14.

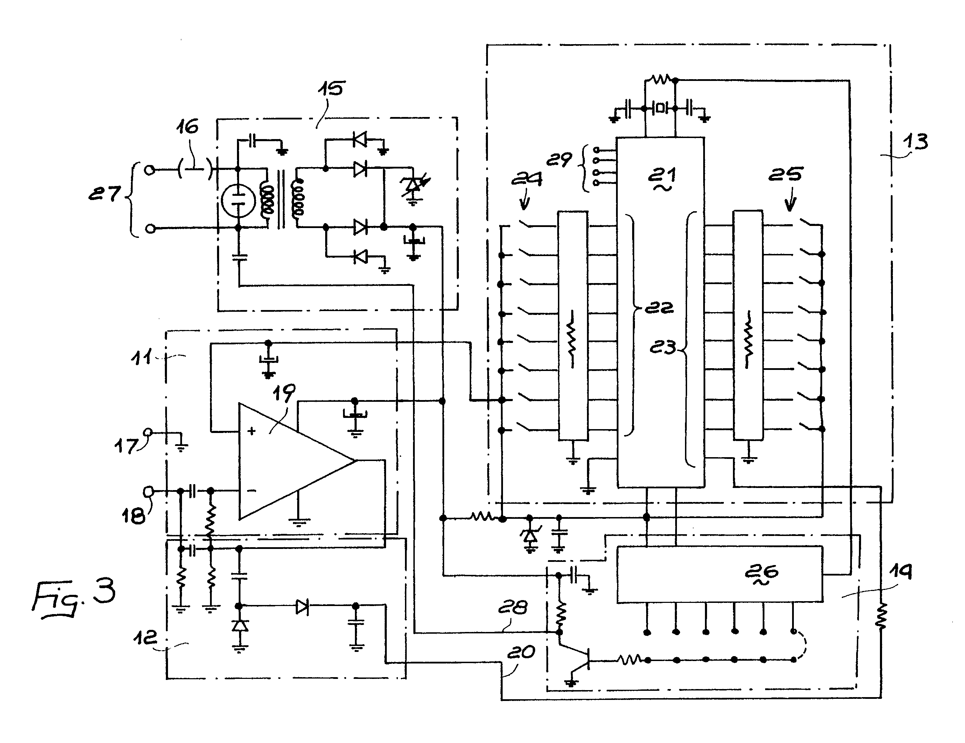

In greater detail, as the diagram of Figure 3 shows, the signal supplied by the meter 10, connected to the poles 17, 18, is amplified by the amplifier 19, the output from which is fed to the detector 12 and, from this, through the line 20 to the microprocessor 21 of the logic unit 13.

The outputs 22, 23 of the microprocessor 21 are connected to the switches 24, 25, which are adapted to be selected manually at the time of installation of the device on the lamp, in a combination which identifies the position of the lamp with which the device is associated.

The microprocessor 21 generates, in addition, a time signal, which is fed to the transmitter 14, comprising a divider 26 which generates a carrier wave of predetemined frequency, which is modulated by the output signal supplied by the microprocessor 21 and is then supplied to the poles 27, connected to the network, upstream of the feeder 15 by means of the line 28, thus carrying the emitted signal on the network line.

The microprocessor periodically carries out a measurement of the current flowing through the lamp and, if no current is present, that is to say if the lamp has failed, generates a message which comprises, in numerical form, a transmission start signal, the code numbers corresponding to the preselected switches 24, 25, any other appropriate data and a sum signal of the preceding signals, adapted for allowing the receiving unit to verify the correctness of the total of data supplied.

For the purpose of preventing two or more failure messages, relating to different lamps, from being simultaneously conveyed on the electric line, thereby rendering the signal incomprehensible to the receiving apparatus, it is provided that the same signal shall be emitted several times, at successive instants separated by intervals of time that differ for each lamp, so that a complete message shall be despatched at least once along the line without superposition of other simultaneous messages.

The additive data present in a failure message may be related to signals generated by sensors of the functioning of the lamp of a different type from the meter 10, for example constituted of a photoelectric cell which observes the effective light emission of the lamp, or of another type, suitable for example for enabling the type of failure detected to be identified, thus enabling the type of repair operation and the materials required to be predetermined.

For this purpose, the microprocessor 21 possesses a plurality of inputs 29, to which such sensors can be connected.

The pick-up and transmitter group, which forms the circuit of Figure 3, is composed of a card carrying the necessary circuit components and encased in a block of synthetic resin, from which two terminals project, adapted for connection to the cables coming from the supply network and from the current probe, and the switches 24, 25, through which the characteristic number for the card and other necessary data are applied.

The resin casing, cast directly onto the components, protects the circuit from atmospheric agents and furthermore guarantees insulation and adequate protection to the operators of the installation and maintenance gangs.

Numerous variants may be introduced, without thereby departing from the scope of the invention in its general characteristics.

## Claims

1. Apparatus for picking up and transmitting failure signals in installations comprising several lamps in parallel, especially for public lighting systems and the like, characterized by the fact that it comprises a pick-up and transmission device associated with each lamp, having an element for measuring the current passing through said lamp and an amplifying circuit, for generating a message and transmitting-said message by waves carried on the feed line for the lamp, there being provided, along the feed line for the lamps, a receiver device for the signal, adapted for picking up the message, recognizing the place of origin and remotely indicating and/or signalling the position of the failed lamp corresponding to it.

2. Apparatus for picking up and transmitting failure signals in installations comprising several lamps in parallel according to Claim 1, characterized by the fact that the pick-up and transmission device associated with each lamp comprises an: inductive current sensor connected, via an amplifier and a signal detector, to a programmed logic unit, for generating a coded message, fed to a transmitter adapted for emitting, on the feed line to the lamp, modulated carried waves carrying said message.

3. Apparatus for picking up and transmitting failure signals in installations comprising several lamps in parallel according to Claim 2, characterized by the fact that the programmed logic unit comprises a plurality of switches which can be manually actuated in accordance with combinations defining unambiguously the lamp with which the pick-up and transmission device is associated, the message emitted by the logic unit comprising a code corresponding to the combination of switches selected.

4. Apparatus for picking up and transmitting failure signals in installations comprising several lamps in parallel according to Claim 2, characterized by the fact that the logic unit comprises one or more inputs for signals supplied from corresponding auxiliary sensor devices, associated with the pick-up and transmission device, adapted for picking up phenomena connected with the failure of the lamp, the message produced by the logic unit comprising data relating to the signals from the auxiliary sensors.

5. Apparatus for picking up and transmitting failure signals in installations comprising several lamps in parallel according to Claim 2, characterized by the fact that the logic unit supplies, in correspondence with the detection of the failed lamp, several successive equal messages, at predetermined intervals which differ for each pick-up and transmission device, of a duration exceeding the duration of a single message.

Fig. 1

Fig. 2

Fig. 3

EP 0 453 659 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | GB-A-2 135 540 (PA CONSULTING SERVICES LTD) * page 2, lines 26 - 120; figures 1-3 * | 1,2-5 | H 02 J 13/00 H 05 B 37/03 |
| Y | EP-A-0 347 317 (FORCLUM SOCIETE DE FORCE ET DE LUMIERE ELECTRIQUES SA) * column 3, lines 33 - 35 * | 2 | |
| Y | EP-A-0 078 171 (PICO ELECTRONICS LTD) * page 8, line 23 - page 9, line 9; figures 1-3 * | 3 | |
| Y | GB-A-2 176 640 (RAYMOND BRUCE MCCLELLAND HARDY) * page 1, lines 6 - 10 * * page 3, lines 109 - 124 @ page 4, lines 22 - 26; figure * | 4 | |
| Y | US-A-1 944 565 (R. MATHES) * page 1, lines 33 - 54 * | 5 | |

| | TECHNICAL FIELDS SEARCHED (Int. Cl.5) |
|---|---|
| | H 02 J H 05 B H 04 L |

The present search report has been drawn up for all claims

| Place of search | Date of completion of search | Examiner |
|---|---|---|
| The Hague | 19 December 90 | HELOT H.V. |